Europäisches Patentamt

European Patent Office

Office européen des brevets

(11) Publication number : 0 447 367 A1

# (12) EUROPEAN PATENT APPLICATION

(21) Application number : 91830010.4

(22) Date of filing : 18.01.91

(51) Int. Cl.⁵ : A21C 9/06

(30) Priority : 14.03.90 IT 4250890

(43) Date of publication of application :
18.09.91 Bulletin 91/38

(84) Designated Contracting States :
AT BE CH DE DK ES FR GB GR IT LI NL SE

(71) Applicant : LA PARMIGIANA S.P.A.
Via G. B. Della Chiesa, 4
I-43036 Fidenza (Parma) (IT)

(72) Inventor : Valesi, Silvio
Via F. lli Pincolini, 7
I-43046 Fideza (Parma) (IT)

(74) Representative : Lanzoni, Luciano
c/o BUGNION S.p.A. Viale Trento Trieste, 25
I-41100 Modena (IT)

(54) A ravioli making machine.

(57) In a machine for making ravioli, the filled and united layers of pasta are conveyed on a belt (1) beneath a first roller (4) and a second roller (9), both power driven, by which the characteristic envelopes are formed and cut. The machine further comprises a forced air outlet (12) to prevent the pasta clinging at the first roller and ensure its regular progress to the second, and a pair of freely revolving reaction rollers (11) by which the belt is supported against the forming and cutting pressures.

fig. 2

EP 0 447 367 A1

The present invention relates to a ravioli-making machine.

The prior art embraces ravioli-making machines in which a filling dispensed by a plurality of nozzles is gathered up between two vertically descending layers of pasta, whereupon the layers are pressed together and formed into single ravioli envelopes by power driven shaping and cutting rollers which rotate about respective horizontal axes.

Such machines generally comprise a first roller by which the ravioli are shaped and cut initially in the vertical direction, and a second roller that functions as a reaction surface for the first. The vertical ribbons of filled pasta envelopes emerging from this first pair of rollers then pass between a similarly disposed second pair of rollers, and are cut horizontally into single ravioli.

Machines of this type betray the drawback that the ribbons of envelopes descend unchecked and unguided between the first and second pairs of rollers, and may therefore deviate from the correct rectilinear vertical trajectory, resulting in misalignment of the second cut and an irregular or even unusable end product.

Further drawbacks stem from the rapid rate of wear on the corrugated cutting edges of the power driven rollers, occasioned by pressure registering through the reaction surfaces, and from the need to replace the rollers in the event of changing to a different size or shape of end product.

The object of the present invention is to overcome the drawbacks mentioned above, and in particular to ensure that the movement of the filled and united layers of pasta is guided throughout the entire production cycle, thereby obviating irregularities in cutting and avoiding the production of unusable stock.

Further objects of the invention are to facilitate the passage of the filled and united pasta layers through the machine, to obtain a more simple and economical adaptation of the machine in respect of the size and shape of ravioli in production, and to increase the durability and dependability of the corrugated blades fitted to the forming and cutting rollers.

The stated objects are realized in a ravioli-making machine according to the present invention. Such a machine is of the type comprising a plurality of nozzles by which a filling is dispensed between two layers of pasta, and rollers by which the filled and united layers of pasta are formed and cut into single envelopes, and is characterized in that it comprises a power driven belt fashioned from a material resistant to incision, by which the filled pasta layers are conveyed toward a first roller serving to form the envelopes and to effect initial cuts in the pasta along the direction of movement of the belt, and from the first roller to a second roller by which the layers of pasta are cut in a direction normal to the first cuts to complete the formation of the envelopes.

The invention will now be described in detail, by way of example, with the aid of the accompanying drawings, in which:
- fig 1 is a perspective of the ravioli-making machine, viewed in its entirety;
- fig 2 is a further perspective showing a detail of the rollers of the ravioli-making machine.

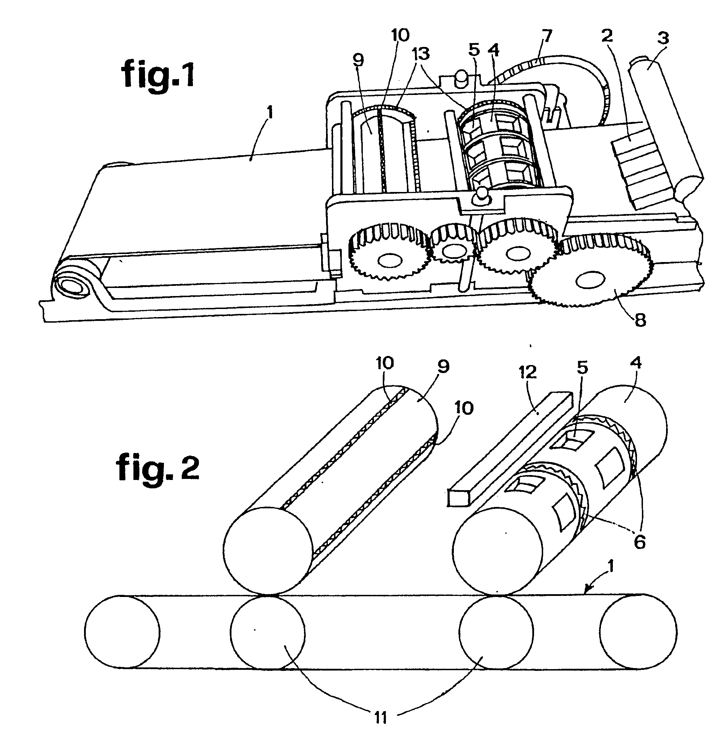

With reference to fig 1, a ravioli-making machine according to the invention comprises a conveyor belt 1 supported by the main frame of the machine, and a plurality of nozzles 2 by which portions of a filling are dispensed onto a first layer of pasta conveyed beneath by the belt.

3 denotes a feed roller from which a second layer of pasta is caused to descend onto the first layer, whereupon the two layers and the filling sandwiched between them are directed beneath a first roller 4 affording pockets 5 positioned so as to accommodate the portions of filling and thus shape the single pasta envelopes.

The first roller 4 is also fitted with a plurality of corrugated blades 6 disposed in circular bands around its circumference, which are designed to cut through the pasta along the feed direction of the belt 1.

The belt 1 is fashioned from a flexible material resistant to incision, such as a synthetic resin, and may be disposed with its conveying surface in a horizontal plane, as illustrated in the drawings, or at an angle of up to 90° from the horizontal.

The first roller 4 is set in motion by a prime mover not illustrated in the drawings, from which drive is transmitted via a chain 7 and a gear 8. Shaped and cut longitudinally by the first roller, the filled pasta envelopes pass in ribbons beneath a second roller 9 which is linked through a train of gears to the first and provided likewise with a plurality of corrugated blades 10; in this instance however, the blades occupy straight line generators of the roller 9 and serve to cut the pasta ribbons transversely into single ravioli.

The first and second rollers 4 and 9 are embodied with serrations 13 at one end in such a way as to drive the conveyor belt 1, albeit the belt 1 might be driven by other means without prejudice to the substance of the invention.

The machine also comprises two freely revolving rollers 11 positioned directly beneath the power driven rollers 4 and 9 on the opposite side of the conveyor belt 1, which serve to support the belt at the points where pressure is applied in forming and cutting the pasta envelopes.

A blower 12 positioned immediately beyond the first roller 4 along the feed direction serves to ensure that the emerging pasta ribbons separate from the rolling surface and thus proceed in regular fashion to the second roller 9.

In operation of a machine thus embodied, a filling is deposited by the nozzles 2 onto a first layer of pasta, whereupon a second layer of pasta is added and the two layers are pressed together between the first roller 4 and the conveyor belt 1.

The pasta layers and filling emerge from the first roller 2 formed into envelopes and cut along the conveying direction into longitudinal ribbons. Thereafter, the longitudinal ribbons pass beneath the second roller 9 and are cut transversely into single ravioli.

In the event of changing to a different size or shape of end product, it suffices to replace the two driven rollers 4 and 9, leaving the reaction rollers 11 in place.

## Claims

1) A ravioli-making machine, of the type comprising a plurality of nozzles (2) by which a filling is dispensed between two layers of pasta, and rollers by which the filled and united layers of pasta are formed and cut into single envelopes, characterized in that it comprises a power driven belt (1) fashioned from a material resistant to incision, by which the filled pasta layers are conveyed toward a first roller (4) serving to form the envelopes and to effect initial cuts in the pasta along the direction of movement of the belt, and from the first roller to a second roller (9) by which the layers of pasta are cut in a direction normal to the first cuts to complete the formation of the envelopes.

2) A ravioli-making machine as in claim 1, wherein the conveyor belt (1) is set in motion by the first and the second rollers (4, 9) through the agency of serrations (13) extending around at least one end of each roller.

3) A ravioli-making machine as in claim 1, wherein the conveying surface of the belt (1) is disposed at an angle of between 0° and 90° with respect to a horizontal plane.

4) A ravioli-making machine as in claim 1, comprising blowing means (12) positioned intermediately of the first and second rollers and serving to ensure regular progress of the filled and united pasta layers toward the second roller (9) by facilitating their separation from the first roller (4).

5) A ravioli-making machine as in claim 1, comprising two freely revolving rollers (11) by which the belt (1) is supported to the end of offsetting pressure applied through the first and second power driven rollers (4, 9) during formation and cutting of the pasta envelopes.

**fig.1**

**fig. 2**

European Patent
Office

**EUROPEAN SEARCH REPORT**

Application Number

EP 91 83 0010

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3354842 (ROBERT O. MANSPEAKER ET AL.)<br>* the whole document * | 1-3, 5 | A21C9/06 |
| X | GB-A-1192869 (THE PILLSBURY COMPANY)<br>* page 3, lines 12 - 79 *<br>* page 3, lines 111 - 117 *<br>* figures 2, 3, 7, 12, 13 * | 1, 3, 5 | |
| X | US-A-3373702 (GINO R. QUILICI)<br>* the whole document * | 1, 3, 5 | |
| A | US-A-2437202 (SALVATORE MARINO)<br>* figures 1, 4-6 * | 1-3, 5 | |
| A | EP-A-206898 (NABISCO BRANDS INC.)<br>* figures 1a, 1b * | 1, 3, 5 | |
| | | | TECHNICAL FIELDS SEARCHED (Int. Cl.5) |
| | | | A21C |

The present search report has been drawn up for all claims

| Place of search | Date of completion of the search | Examiner |
|---|---|---|
| BERLIN | 18 JUNE 1991 | ALVAREZ ALVAREZ C. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0403)